# EUROPEAN PATENT SPECIFICATION

(11) **EP 1 728 903 B1**
(45) Date of publication and mention of the grant of the patent: **22.10.2008**
(21) Application number: 05425393.5
(22) Date of filing: 31.05.2005
(51) Int. Cl.: D03C 1/14, F16N 11/00, F16N 21/00, F16C 3/22, D03J 1/00

(54) **Improved lubrication device for bearings of leverages actuating heald frames in weaving looms**
Verbesserte Schmiervorrichtung für Lager der Hebel zur Betätigung der Schäfte einer Webmaschine
Dispositif de lubrification amélioré pour paliers de leviers d'actionnement des cadres d'un métier à tisser

(43) Date of publication of application: 06.12.2006
(73) Proprietor: F.I.R.S.T. S.p.A., 24028 Ponte Nossa (BG) (IT)
(72) Inventor: CREMONESI, Gian Luigi, 24028 PONTE NOSSA (IT)
(74) Representative: Faggioni, Carlo Maria

(56) References cited:
- EP-A- 0 595 380
- EP-A- 1 039 208
- DE-B3- 10 316 320
- FR-A- 2 718 465
- US-A- 5 251 672
- US-A- 5 404 966

## Description

The present invention relates to a lubrication device for the bearings of the leverages actuating heald frames in weaving looms.

As is known to skilled people in the field, heald frames are the loom elements which allow to lift and lower groups of warp threads according to preset cycles, so as to determine a through-channel for insertion of the weft thread. The spreading modes of warp threads across the various heald frames and movement frequency of the latter determine cloth pattern, in combination with the type of inserted weft.

Each heald frame consists of a rigid rectangular frame having a small thickness, typically 10-20 mm, within which the individual healds are fastened, through a central eyelet of which the warp threads are then made to run. In simpler weavings (for example fabric weaving), the heald frames are only two, whereas in more complex patterns the number of heald frames rises up to 20/28 frames.

The opening angle of the warp threads is determined by the width of the alternate movement of the heald frames in a vertical plane and there is hence the opportunity - for the purpose of obtaining opening angles of the warp threads which do not vary excessively from the first to the last frame, the vertical excursion of the frames being equal - of using frames having as small a thickness as possible and of arranging the individual frames "packetwise" i.e. closely adjacent to one another.

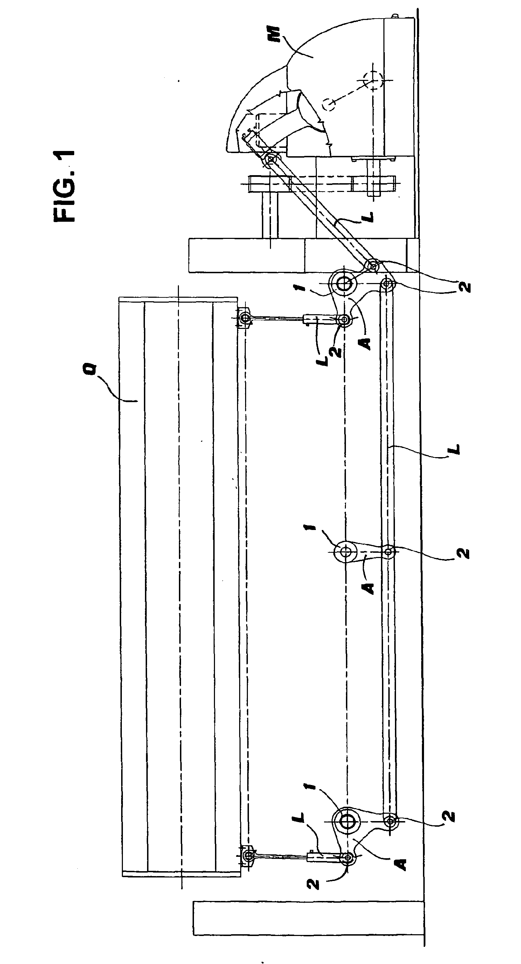

This arrangement of the frames entails the necessary absence of any mechanical device between the frames. As a matter of fact, the heald frames normally slide on vertical outer side guides, and are driven in their alternate sliding along such guides by suitable leverages arranged underneath the frames and fastened to the lower crossmember thereof, as diagrammatically shown in fig. 1. Of course, also said leverages must be of a very limited thickness, particularly also in the hinging areas between two levers, so that the maximum thickness of the leverages never exceeds that of the frame which they drive.

Since the above leverages are subject to alternate movements with a very high frequency (in the order of 10 cycles/sec. and above), the problem arises of accomplishing correct lubrication of the bearing of the individual leverage-forming levers, which lubrication must be effective for a significantly long period of time, so as not to require excessively burdensome maintenance.

From the diagrammatical drawing of fig. 1 it is possible to derive that a typical leverage for movement transmission from weaving machine M to heald frame Q, comprises multiple levers L connected by tilting joints A. Joints A always have a bearing 1 supporting the joint, mounted in a fixed position on a support shaft integral with the loom, and one or more mobile-position bearings 2, whereto the individual motion-transmitting levers L are hinged. The leverage shown in fig. 1, for example, comprises levers having one, two or three mobile-position bearings 2.

Lubrication of the fixed-position bearings 1 of course causes no problem, considering that they can be easily connected to the general loom lubrication system through tubes running along the fixed shafts A supporting said joints. Much more complicated is instead the problem as far as bearings 2 are concerned, i.e. the mobile-position ones which, precisely due to the continuous tilting thereof, are not suitable to be easily connected to the central lubrication system.

Attempts in this respect have in actual fact been made, accomplishing connections with hoses between the lubrication tube housed in the fixed shafts which carry joints A and bearings 2. According to such solution, when joints A comprise more than a single bearing, the joints are preferably formed by coupling two shaped plates, so as to form therein a channel system connecting the individual bearings to a single common inlet of the lubrication grease, to be connected to said hoses. This system, however, is remarkably complicated, entails an excessive rise of construction costs, is more prone to malfunctioning due to the presence of the numerous hoses in a restricted space and finally has, for the same reason, remarkable cleaning problems; as a result, this type of solution has had virtually no market diffusion.

The solution generally applied today is therefore that which provides to use bearings 2 of the self-lubricating, sealed type, and hence having a preset life. At the end of their useful life (a few years) bearings 2 are discarded and replaced. This solution is substantially satisfactory from an economical point of view, since bearings of the above-mentioned watertight type are currently available at a sufficiently moderate price, but it is far from satisfactory from a maintenance point of view. Due to the position of the leverages of the heald frames, removal and mounting of bearings 2 is particularly cumbersome, requires the intervention of skilled staff and causes excessively long loom down-times.

FR 2 718 465 A shows a lubrication device for the bearings of the leverages actuating the heald frames in a weaving loom, of the type in which one or more mobile-position bearings are supported by planar joints tilting about fixed-position bearings on respective support shafts, whereby at least part of the bearings of each of said joints is connected through tubes to a dispenser of lubricating matter integral with the joints.

It is hence an object of the present invention to provide an improved lubrication device for the bearings of the leverages actuating the heald frames, which allows to solve the above-mentioned problems, i.e. a device which does not have high construction costs, which does not entail a bulk dissimilar from that of current leverages, and in particular which does not provide the presence of bulky hoses, and finally which allows periodical maintenance operations to be carried out within a short time by unskilled staff.

Such objects are achieved, according to the present invention, by a device of the above-mentioned type having the features defined in the attached main claim.

Further features and details of said device will be clear from the following detailed description of a preferred embodiment of the same, wherein:
fig. 1 is a diagrammatical side elevation view of the leverage actuating a heald frame;
fig. 2 is an enlarged-scale side view of a side of a multiple-bearing joint of such leverage, incorporating the improved lubricating device according to the present invention; fig. 3 is a section view according to line III-III of fig. 2; and

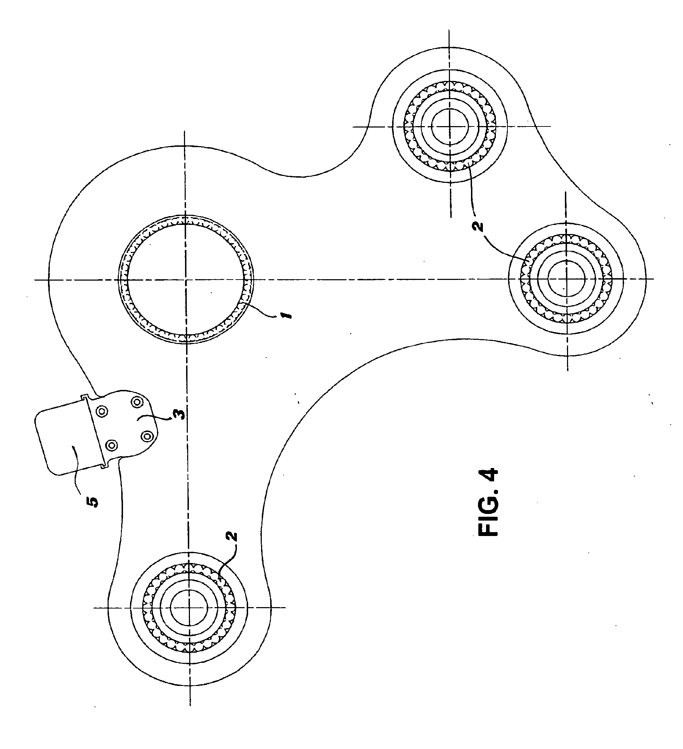

fig. 4 is a similar view to fig. 2 which shows the other side of the same joint.

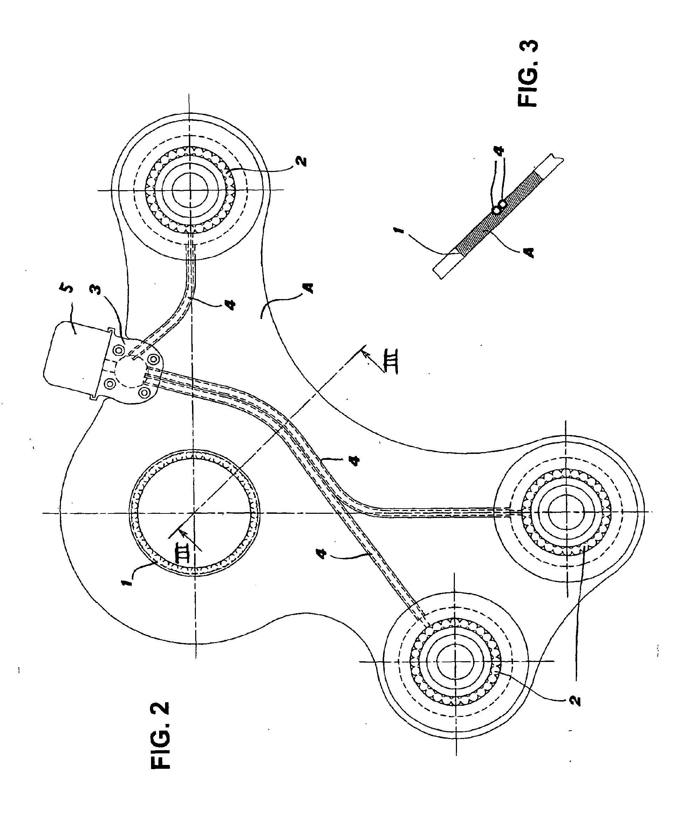

As clearly illustrated in fig. 2, a generic joint A of the leverage actuating a heald frame comprises a stationary-position support bearing 1, mounted on a fixed shaft (not shown) of the loom, and one or more tilting, mobile-position bearings 2, in a, whereto the individual levers L of the leverage are hinged.

According to the invention, on one side of joint A there is securely fixed a grease dispenser 3, connected to each of bearings 2 through respective small-diameter tubes 4. Tubes 4 are preferably made of nylon and fixed to joint A by any known fixing system, for example by means of adhesives, screw staples and the like.

In correspondence of one of its sides free from tubes 4 - preferably the one facing towards the external side of the joint, which is substantially flush with an edge of the joint - dispenser 3 further has a connection, preferably of the quick-release, snap-fixing type, for a lubrication grease cartridge 5. During manufacturing of joint A, once mounting of bearings 2 of dispenser 3 and of tubes 4 is completed, grease is fed to dispenser 3 until dispenser 3 and tubes 4 are filled. At this point cartridge 5 is introduced into dispenser 3, said cartridge containing an amount of grease sufficient to guarantee correct bearing lubrication for a maintenance time of a preset length.

At the end of the preset period of use, maintenance of the system is very simple. As a matter of fact, it is sufficient to remove and discard depleted cartridges 5 from joints A and to replace them with new cartridges 5 full of lubricating matter, following which the loom is immediately ready for use. By thoroughly choosing the installation position of cartridges 5 it will be easily possible to provide to the replacement thereof without having to disassemble the leverages, consequently achieving dramatic simplification of maintenance operations against current ones which entail full disassembling of the leverages and replacement of the respective bearings.

The lubrication device of the present invention of course is not limited to lubrication of mobile-position bearings 2, since it is possible to equally feed a lubrication matter also to fixed-position support bearings 1. In this case the structure of the support shafts of such bearings can be advantageously simplified, fully eliminating the lubrication channels.

From the preceding description it is clear that the present invention has fully achieved the intended object, providing an improved lubrication device which allows to provide correct and effective lubrication for the bearings of the leverages actuating the heald frames for a preset period of time, without this entailing any substantial change of the structure of said leverages, but simply entailing the addition of the grease distribution system - from cartridge 5 to individual bearings 2 - which system can be applied to current joints A without substantially changing the same. At the end of its useful life, the device is quickly restored thanks to the simple operation of replacement of depleted cartridges 5, which can be performed also by unskilled staff, in a very short time and with no need to disassemble any part of the leverages.

The present invention has been described with reference to a preferred embodiment of the same, but it is clear that various changes can be applied, for example as far as the structure of the grease distribution system to the bearings is concerned, or the shape, arrangement and type of fastening of the cartridge, which changes are all within the reach of a person skilled in the field and which, for this reason, fall within the scope of the present invention which is hence exclusively limited by the content of the accompanying claims.

## Claims

1. A lubrication device for the bearings of the leverages actuating the heald frames in a weaving loom, of the type in which one or more mobile-position bearings (2) are supported by planar joints (A) tilting about fixed-position bearings (1) on respective support shafts, whereby at least part of the bearings (1, 2) of each of said joints is connected through tubes (4) to a dispenser (3) of lubricating matter integral with joint (A), **characterised in that** a cartridge (5) full of said lubricating matter is removably connected to said dispenser (3).

2. The lubrication device as in claim 1), wherein said tubes (4) are fixed to a side wall of the joint (A) by means of adhesives, screw staples or other similar fixing means.

3. The lubrication device as in claim 2), wherein said tubes (4) connect each of the bearings (1, 2) to the dispenser (3).

4. The lubrication device as in any one of the previous claims, wherein said tubes (4) are made of nylon.

5. The lubrication device as in any one of the previous claims, wherein said dispenser (3) is fixed to the joint (A) so as to have one of the sides thereof substantially flush with an outer edge of the joint (A).

6. The lubrication device as in any one of the preceding claims, wherein said cartridge (5) is connected to the side of said dispenser (3) flush with the outer edge of the joint (A).

7. The lubrication device as in any one of the preceding claims, wherein said cartridge (5) is connected to the dispenser (3) through quick-release, snap-fixing means.

8. The lubrication device as in any one of the preceding claims, wherein said cartridge (5) contains an amount of lubricant sufficient to lubricate the bearings (1, 2) of the joint for a predetermined period of time.

9. The lubrication device as in any one of the preceding claims, wherein said cartridge (5) is connected only to the mobile-position bearings (2).

## Patentansprüche

1. Verbesserte Schmiervorrichtung für die Lager der Gestänge, die in einem Webstuhl den Schaftrahmen betätigen, der Bauart, bei der ein oder mehrere in einer beweglichen Position befindliche Lager (2) von ebenen Verbindungsgliedern (A) abgestützt sind, die um an festen Positionen befindliche Lager (1) auf entsprechenden Stützwellen schwenken, **dadurch gekennzeichnet, dass** zumindest ein Teil der Lager (1, 2) von jedem der genannten Verbindungsglieder durch Schläuche (4) mit einer Abgabevorrichtung (3) von Schmierstoff verbunden sind, die fest mit dem Verbindungsglied (A) verbunden ist, und dass eine Patrone (5), die mit dem genannten Schmierstoff gefiillt ist, lösbar mit der genannten Abgabevorrichtung (3) verbunden ist.

2. Schmiervorrichtung nach Anspruch 1, **dadurch gekennzeichnet, dass** die genannten Schläuche (4) an einer Seitenwand des Verbindungsglieds (A) durch Klebstoff, Schrauben, Ösen oder ähnliche Befestigungsmittel befestigt sind.

3. Schmiervorrichtung nach Anspruch 2, **dadurch gekennzeichnet, dass** die genannten Schläuche (4) jedes der Lager (1, 2) mit der Abgabevorrichtung (3) verbinden.

4. Schmiervorrichtung nach einem der vorangehenden Ansprüche, **dadurch gekennzeichnet, dass** die genannten Schläuche (4) aus Nylon bestehen.

5. Schmiervorrichtung nach einem der vorangehenden Ansprüche, **dadurch gekennzeichnet, dass** die genannte Abgabevorrichtung (3) an dem Verbindungsglied (A) so befestigt ist, dass sie mit einer von ihren Seiten im wesentlichen bündig mit einem äußeren Rand des Verbindungsglieds (A) abschließt.

6. Schmiervorrichtung nach einem der vorangehenden Ansprüche, **dadurch gekennzeichnet, dass** die genannte Patrone (5) mit der Seite der genannten Abgabevorrichtung (3) bündig mit dem äußeren Rand des Verbindungsglieds (A) verbunden ist.

7. Schmiervorrichtung nach einem der vorangehenden Ansprüche, **dadurch gekennzeichnet, dass** die Patrone (5) mit der Abgabevorrichtung (3) durch schnell lösbare einrastende Befestigungsmittel verbunden ist.

8. Schmiervorrichtung nach einem der vorangehenden Ansprüche, **dadurch gekennzeichnet, dass** die genannte Patrone (5) eine Menge an Schmierstoff enthält, um die Lager (1, 2) des Verbindungsglieds für eine vorbestimmte Zeitspanne zu schmieren.

9. Schmiervorrichtung nach einem der vorangehenden Ansprüche, **dadurch gekennzeichnet, dass** die genannte Patrone (5) lediglich mit den an einer beweglichen Position befindlichen Lagern (2) verbunden ist.

## Revendications

1. Dispositif de lubrification pour les paliers des leviers actionnant les cadres à vis dans un métier à tisser, du type dans lequel un ou plusieurs paliers (2) dont les positions sont mobiles sont supportés par des articulations planes (A) s'inclinant autour de paliers (1) dont les positions sont fixes sur des axes de support respectifs, grâce à quoi au moins une partie des paliers (1, 2) de chacune desdites articulations est reliée par des tubes (4) à un distributeur (3) de matière lubrifiante intégré à l'articulation (A), **caractérisé en ce qu'**une cartouche (5) remplie de ladite matière lubrifiante est raccordée de façon amovible audit distributeur (3).

2. Dispositif de lubrification selon la revendication 1, dans lequel lesdits tubes (4) sont fixés à une paroi latérale de l'articulation (A) au moyen d'adhésifs, d'attaches à vis ou d'autres moyens similaires de fixation.

3. Dispositif de lubrification selon la revendication 2, dans lequel lesdits tubes (4) raccordent chacun des paliers (1, 2) au distributeur (3).

4. Dispositif de lubrification selon l'une quelconque des revendications précédentes, dans lequel lesdits tubes (4) sont réalisés en Nylon.

5. Dispositif de lubrification selon l'une quelconque des revendications précédentes, dans lequel ledit distributeur (3) est fixé à l'articulation (A) afin que l'un de ses côtés soit sensiblement au niveau d'un bord extérieur de l'articulation (A).

6. Dispositif de lubrification selon l'une quelconque des revendications précédentes, dans lequel ladite cartouche (5) est reliée au côté dudit distributeur (3) au niveau du bord extérieur de l'articulation (A).

7. Dispositif de lubrification selon l'une quelconque des revendications précédentes, dans lequel ladite cartouche (5) est reliée au distributeur (3) par l'intermédiaire d'un moyen de fixation par encliquetage, à libération rapide.

8. Dispositif de lubrification selon l'une quelconque des revendications précédentes, dans lequel ladite cartouche (5) contient une quantité de lubrifiant suffisante pour lubrifier les paliers (1, 2) de l'articulation pendant une période de temps prédéterminée.

9. Dispositif de lubrification selon l'une quelconque des revendications précédentes, dans lequel ladite cartouche (5) est reliée uniquement aux paliers (2) dont les positions sont mobiles.
